# EUROPÄISCHE PATENTSCHRIFT

(11) **EP 2 349 785 B1**
(45) Veröffentlichungstag und Bekanntmachung des Hinweises auf die Patenterteilung: **19.09.2012**
(21) Anmeldenummer: 09744616.5
(22) Anmeldetag: 07.10.2009
(51) Int. Cl.: B60R 11/02, B60K 37/06, B60K 35/00

(54) **BILDSCHIRMVERSTELLEINRICHTUNG FÜR EIN KRAFTFAHRZEUG**
SCREEN ADJUSTING DEVICE FOR A MOTOR VEHICLE
DISPOSITIF DE REGLAGE D'ECRAN POUR VEHICULE AUTOMOBILE

(30) Priorität: 29.10.2008 DE 102008053734
(43) Veröffentlichungstag der Anmeldung: 03.08.2011
(73) Patentinhaber: Brose Fahrzeugteile GmbH & Co. Kommanditgesellschaft, Coburg, 96450 Coburg (DE)
(72) Erfinder: DIETZEL, Renee, 96242 Sonnefeld (DE); STEGNER, Daniela, 96450 Coburg (DE)
(74) Vertreter: FDST Patentanwälte
(86) Internationale Anmeldenummer: PCT/EP2009/007180
(87) Internationale Veröffentlichungsnummer: WO 2010/049055

(56) Entgegenhaltungen:
- EP-A1- 1 911 628
- WO-A1-99/65734
- DE-A1- 10 042 495
- DE-A1-102005 038 485
- DE-U1- 9 409 709

## Beschreibung

Die Erfindung bezieht sich auf eine Bildschirmverstelleinrichtung für ein Kraftfahrzeug nach dem Oberbegriff des Anspruchs 1.

In modernen Kraftfahrzeugen Ist häufig im Bereich des Armaturenbretts ein Bildschirm vorgesehen, der als Ausgabeschnillstelle eines Bordcomputers zur Anzeige vielfältiger Umgebungs- und Betriebsgrößen, wie z.B. der Außentemperatur des Kraftstoffverbrauchs, etc. dient. Zusätzlich oder alternativ dient ein solcher Bildschirm häufig auch als Ausgabegerät eines Navigationssystems, Autoradios, etc. Bei Verwendung eines berührungssensitiven Bildschirms (Touch-Screen) oder bei Zuordnung von separaten Bedienelementen zu einem an sich nicht berührungsempfindllchen Display kann ein solcher Bildschirm auch als Eingabeschnittstelle für den Bordcomputer, das Navigationssystem oder das Autoradio vorgesehen sein.

Bildschirme werden ferner In einem Kraftfahrzeug auch im rückwärtigen Bereich des Fahrzeuginnenraums eingesetzt. Hier bilden diese Bildschirme hauptsächlich Teil eines multimedialen Unterhaltungssystems (rear seat entertainment).

Aus Platzgründen, zum Schutz vor Beschädigung und Verschmutzung und nicht zuletzt auch als Dlebstahlschutzmaßnahme, sind solche Bildschirme häufig derart verstellbar, dass sie nur dann vom Fahrzeuginnenraum aus zugänglich (und damit auch sichtbar) sind, wenn sie tatsächlich gebraucht werden. Ansonsten können solche Bildschirme in eine gegenüber dem Fahrzeuginnenraum verborgene Ruhe - oder Parkposition gefahren werden.

Da der für die Aufnahme des Bildschirms in der Parkposition zur Verfügung stehende Bauraum in einem Kraftfahrzeug in der Regel stark beengt Ist, müssen Kraftfahrzeugbildschirme häufig entlang eines komplexen Verstellweges zwischen der Öffnungsstellung und der Parkposition bewegt werden. In der Parkposition ist der Bildschirm häufig in einer im Wesentlichen horizontalen Lage innerhalb des Armaturenbretts aufgenommen. Zur Bewegung in die Öffnungsstellung wird der Bildschirm in der Regel zunächst in im Wesentlichen horizontaler Richtung aus dem Armaturenbrett herausgeschoben und danach oder gleichzeitig in eine schräg senkrechte Orientierung gekippt, In der der Bildschirm für einen Fahrzeuginsassen gut einsehbar ist Zur Realisierung dieser Bewegung ist der Bildschirm häufig durch eine Kulissenführung und/oder ein mehr oder weniger komplexes Hebelsystem geführt. Die Verstellung des Bildschirms erfolgt hierbei oft über einen Zahnstangenantrieb. Bildschirmverstelleinrichtungen der oben beschriebenen Art sind insbesondere aus DE 10 2006 012 010 A1, DE 10 2005 062 030 A1 und DE 199 38 690 A1 bekannt. Eine Bildschirmverstelleinrichtung gemäß dem Oberbegriff des Anspruchs 1, bei der der Bildschirm- durch einen Seilzug bewegt wird, ist des Weiteren aus WO 99/65734 A1 bekannt. Eine Verstellung der Bildschirmneigung mittels eines Seilzugs ist ferner aus DE 94 09 709 U1 bekannt.

Aufgrund der Komplexität solcher Bildschirmverstelleinrichtungen und der beengten Einbausituation einer solchen Einrichtung in einem Kraftfahrzeug gestaltet sich die Montage der Einrichtung in einem Kraftfahrzeug häufig schwierig und zeitaufwändig.

Der Erfindung liegt die Aufgabe zugrunde, eine demgegenüber verbesserte, insbesondere also leicht und rationell montierbare Bildschirmverstelleinrichtung anzugeben.

Diese Aufgabe wird erfingdungsgemäß gelöst durch die Merkmale des Anspruchs 1. Die Bildschirmverstelleinrichtung umfasst danach einen Bildschirm oder zumindest einen Bildschirmträger zur Halterung desselben sowie einen Seilzugantrieb, mit dem der Bildschirm bzw. Bildschirmträger zwischen einer Öffnungsstellung und einer Parkstellung verstelit werden kann. In der Öffnungsstellung ist der Bildschirm hierbei von einem Fahrzeuginnenraum aus zugänglich (insbesondere sichtbar). In der Parkstellung ist der Bildschirm dagegen gegenüber dem Fahrzeuginnenraum verborgen. Der Sellzugantrieb umfasst einen Seilzug, der über einen Mitnehmer (mittelbar oder unmittelbar) mit dem Bildschirm bzw. dem Bildschirmträger gekoppelt ist. Dieser Seilzug ist (zumindest antriebsmäßig) beidendseitig über zwei Umlenkelemente auf eine mit einem Antriebsmotor gekoppelte Wickeltrommel geführt. Der Seilzug ist dabei auch über mindestens eine Seilspanneinheit geführt.

Die Begriffe "Seil" und "Seilzug" werden hierbei als Synonym für ein flexibles Zugelement beliebiger Gestaltung verstanden. Seile bzw. Seilzüge im Sinne der Erfindung sind somit insbesondere verseilte Zugstränge, Riemen, Bänder oder Ketten aus beliebigem Material und mit beliebigem Querschnitt, so z.B. neben Stahlseilen und Kunststoffriemen auch Zahnriemen, Keilriemen oder Gliederketten.

Erfindungsgemäß umfasst der Seilzugantrieb zur Lagerung der Wickeltrommel einen Lagerblock, der mit der Seilspanneinheit eine selbststabile Vormontageeinheit bildet oder zu einer solchen vormontierbar ist. Als "selbststabil" wird die zumindest aus dem Lagerblock und der Seilspanneinheit gebildete Vormontageeinheit insofern bezeichnet, als diese Teile unabhängig von den sie in der Einbausituation umgebenden Fahrzeugbestandteilen (im Vormontagezustand) aneinander befestigt bzw. (in einem ggf. vorhandenen Rohzustand) aneinander befestigbar sind. Die Vormontageeinheit kann somit also unabhängig von dem Kraftfahrzeug montiert und als Ganzes in das Kraftfahrzeug eingesetzt werden.

Der Erfindung liegt die Überlegung zugrunde, dass für eine Bildschirmverstelleinrichtung der oben genannten Art vorteilhaft anstelle eines Zahnstangenantriebs ein Seilzugantrieb zum Einsatz kommen kann, zumal dieser besonders flexibel und unaufwändig an beengte Bauraumverhältnisse und komplexe Bewegungsbahnen angepasst werden kann. Nachteilig an einem herkömmlichen Seilzugantrieb ist aber erkanntermaßen, dass dieser üblicherweise eine Vielzahl von nicht zusammenhängenden Kleinteilen, wie Umlenkrollen, Spannrollen, etc. umfasst, die die Montage des Seilzugantriebs in dem Kraftfahrzeug wiederum verkomplizieren würden. Hier setzt die Erfindung an. Indem erfindungsgemäß zumindest das Kernstück des Seilzugantriebs, nämlich der Lagerblock für oder mit der Wickeltrommel und die Seilspanneinheit vormontierbar bzw. vormontiert sind, kann eine wesentliche Herstellungsvereinfachung erzielt werden. Die Vereinfachung besteht insbesondere darin, dass die Montage des kleinteiligen und damit schwierig zusammensetzbaren Seilzugantriebs zumindest insoweit nicht unter den beengten Platzverhäfinissen im Kraftfahrzeug erfolgen muss, sondern separat hiervon im freien Raum vorgenommen werden kann. Insbesondere ermöglicht die zumindest teilweise Vormontierbarkeit des Seilzugantriebs ferner, diesen örtlich getrennt von der Endmontage des Kraftfahrzeugs, insbesondere durch einen Zulieferer vorzufertigen.

Im Sinne einer besonders einfachen Vormontierbarkeit ist vorgesehen, dass ein Gehäuse der Seilspanneinheit zumindest teilweise einstückig mit dem Lagerblock für die Wickeltrommel gefertigt ist.

Die Seilspanneinheit umfasst in zweckmäßiger Ausbildung ein (orts-)festes Umlenkelement sowie ein weiteres Umlenkelement, das gegenüber dem festen Umlenkelement zur Erstellung eines Längenausgleichs des Seilzugs gegen eine Vorspannung elastisch auslenkbar ist. Das auslenkbare Umlenkelement ist hierbei insbesondere linear oder krummlinig an einem Gehäuse der Seilspanneinheit geführt.

Zumindest das feste Umlenkelement ist zweckmäßigerweise einstückig mit dem Lagerblock ausgebildet. In einfacher Ausgestaltung sind die Umlenkelemente der Seilspanneinhek vorzugsweise durch Achsen gebildet, die drehfest an dem Gehäuse der Spanneinheit gehalten sind. Alternativ können die Umlenkelemente aber auch durch Rollen gebildet sein. In letzerem Fall ist zweckmäßigerweise die dem festen Umlenkelement entsprechende Rolle auf einer einstückig mit dem Lagerblock ausgebildeten Achse gelagert.

Vorzugsweise umfasst das auslenkbare Umlenkelement eine Achse, die in einer Langlochführung verschiebbar geführt Ist. Die Langlochführung ist insbesondere durch zwei fluchtend in einander gegenüberliegende Wände des Gehäuses eingebrachte Langlöcher gebildet. Um einerseits die Spanneinheit einfach herstellen und montieren zu können, andererseits aber einen sicheren Halt der Achse des auslenkbaren Umlenkelements in der Langlochführung und eine kippsichere Führung dieser Achse zu gewährleisten, ist diese Achse in vorteilhafter Ausführung mit mindestens einem Radialvorsprung versehen, der mit der Langlochführung nach Art eines Bajonettverschlusses zusammenwirkt. So ist dieser Radialvorsprung derart an der Achse des auslenkbaren Umlenkelements angebracht, dass er im Montagezustand der Achse die Langlochführung formschlüssig hintergreift, dass die Achse aber in gegenüber dem Montagezustand gedrehtem Zustand durch die Langlochführung hindurchführbar ist. Anstelle eines einzigen Radialvorsprungs ist die Achse vorzugsweise mit - insbesondere an jedem Ende jeweils - zwei diametral einander gegenüberliegenden Radialvorsprüngen versehen.

Anstelle einer Langlochführung kann zu Führung des auslenkbaren Umlenkelements auch eine Schienenführung oder ein schwenkbar am Gehäuse der Seilspanneinheit gelagerter Hebelarm vorgesehen sein.

Im Sinne einer einfachen Montage des Seilzugantriebs, insbesondere um den Seilzug einfach in die Seilspanneinheit einfädeln zu können, umfasst das Gehäuse derselben vorzugsweise eine zumindest zu einer Seite offene Gehäuseschale, die einstückig an den Lagerblock angeformt ist, sowie einen auf diese Gehäuseschale aufsteckbaren oder aufrastbaren Gehäusedeckel. Dieser Gehäusedeckel ist hierbei zweckmäßigerweise senkrecht zur Achse der Umlenkelemente der Spanneinheit angeordnet.

Um in beiden Zugrichtungen des Seilzugantriebs, d.h. sowohl beim Schließen des Bildschirms als auch beim Öffnen des Bildschirms, einen effektiven Längenausgleich des Seilzugs zu erhalten, ist der Seilzug vorzugsweise beidendseitig über je eine Seilspanneinheit auf die Wickeltrommel geführt. Es sind also zwei Seilspanneinheiten vorgesehen, von denen jeweils eine der Wickeltrommel in jeder der beiden Zugrichtungen unmittelbar vorgeordnet ist. Beide Seilspanneinheiten sind hierbei in der vorstehend beschriebenen Weise ausgeführt, insbesondere also mit dem Lagerblock vormontiert bzw. vormontierbar.

Um den Vorfertigungsgrad der Bildschirmverstelleinrichtung weiter zu steigern, ist vorzugsweise der Lagerblock mit der oder jeder daran vormontierten Seilspanneinheit auf einem zur Halterung des Motors vorgesehenen Motorträger aufrastbar.

In einer vorteilhaften Weiterentwicklung der Erfindung ist die Wickeltrommel mit einem entlang ihrer axialen Ausdehnung variierenden Durchmesser versehen. Hierbei wird die Erkenntnis ausgenutzt, dass durch Variierung des Durchmessers der Wickeltrommel die Übersetzung des Seilzugantriebs, und damit die Seilzuggeschwindigkeit bei konstanter Motordrehzahl gezielt variiert werden kann. Wesentlich für die Übersetzung der Wickeltrommel ist hierbei der Durchmesser der Wickeltrommel an der Seilablösung, d.h. an der Stelle der Wickeltrommel, an der sich der Seilzug von der Wickeltrommel bei gegebener Seilzugstellung ablöst. Vorzugsweise ist die Wickeltrommel dabei derart gestaltet, dass sie in demjenigen axialen Bereich, der nach Maßgabe der Seilablösung einem an die Öffnungsstellung angrenzenden Bereich des Bildschirmverstellwegs entspricht, einen kleineren Durchmesser aufweist als in einem axialen Bereich, der wiederum nach Maßgabe der Seilablösung einer Mittelstellung des Bildschirms entlang seines Verschiebeweges zwischen der Öffnungsstellung und der Parkstellung entspricht. Hierdurch wird erreicht, dass sich der Bildschirm bei konstanter Motordrehzahl in einem an die Öffnungsstellung angrenzenden Bereich seines Verstellweges besonders langsam bewegt. Dies sorgt insbesondere für ein harmonisches Stellverhalten. Zudem wird durch die vergrößerte Übersetzung in diesem Bereich auch die Motorbelastung vergleichsweise gering gehalten. Dies ist insbesondere angesichts des Umstands von Bedeutung, dass im Bereich der Öffnungsstellung des Bildschirms von dem Seilzugantrieb aufgrund ungünstiger Hebelverhältnisse in der Regel eine besonders hohe Zugkraft zur Verstellung des Bildschirmes aufgebracht werden muss.

Eine Wickeltrommel mit variierendem Durchmesser kann vorteilhaft sowohl bei der vorstehend beschriebenen Einrichtung als auch bei einer ansonsten abweichend gestalteten Bildschirmverstelleinrichtung mit Seilzugantrieb vorgesehen sein. Dieses Merkmal wird insofern auch als eigenständige Erfindung angesehen.

Nachfolgend wird ein Ausführungsbeispiel der Erfindung anhand einer Zeichnung näher erläutert. Darin zeigen:
- Fig. 1 bis 5: eine Bildschirmverstelleinrichtung mit einem einen Bildschirm haltemden Bildschirmträger, einer Kulissenführung für den Bildschirmträger sowie einen mit dem Bildschirmträger gekoppelten Seilzugantrieb in aufeinanderfolgenden Stellungen entlang eines Bildschirmverstellweges zwischen einer Öffnungsstellung (Fig. 1) und einer Parkstellung (Fig. 5),
- Fig. 6: in einer Explosionsdarstellung einen Lagerblock für eine Wickeltrommel des Seilzugantriebs mit zwei daran angeformten Seilspanneinheiten,
- Fig. 7: in einer weiteren Explosionsdarstellung den Lagerblock und die Seilspanneinheiten sowie zusätzlich die Wickeltrommel und einen Seilzug des Seilzugantriebs,
- Fig. 8: in perspektivischer Ansicht von schräg oben den Lagerblock, die Wickeltrommel, die Seilspanneinheiten sowie den Seilzug in vormontiertem Zustand,
- Fig. 9: in perspektivischer Darstellung von unten den Lagerblock und die Seilspanneinheiten in vormontiertem Zustand,
- Fig. 10: in einem Längsschnitt den Lagerblock und eine der Seilspanneinheiten mit vormontierter Wickeltrommel und vormontiertem Seilzug, sowie
- Fig. 11: in perspektivischer Ansicht den Lagerblock, die Seilspanneinheiten, die Wickeltrommel und den Seilzug vormontiert auf einer Motortraverse.

Einander entsprechende Teile sind in allen Figuren stets mit gleichen Bezugszeichen versehen.

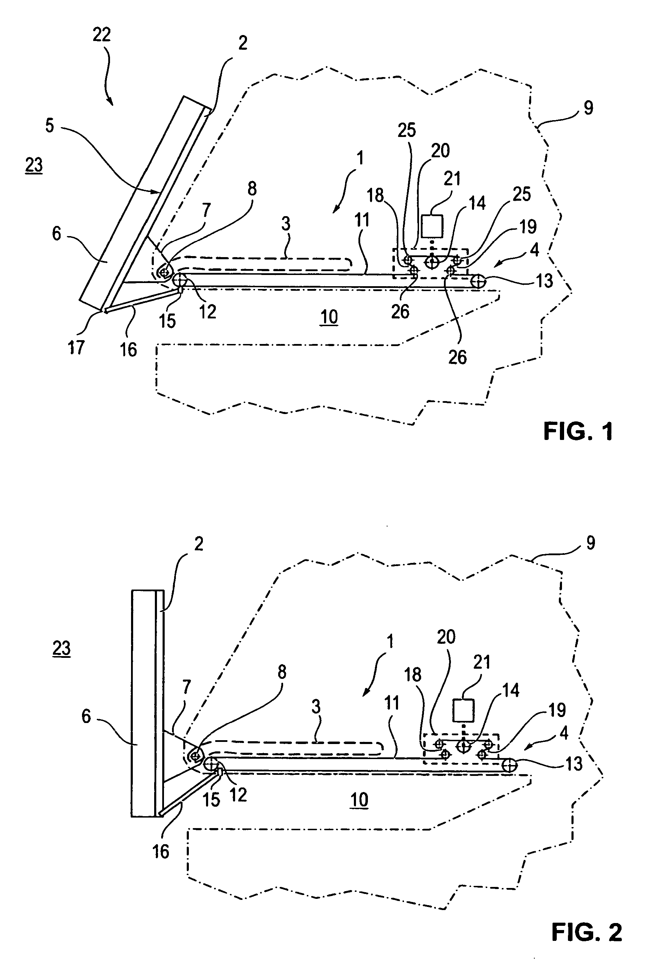

Die in den Fig. 1 bis 5 lediglich grob schematisch dargestellte (Bildschirmverstell-) Einrichtung 1 ist im Wesentlichen gebildet durch einen Bildschirmträger 2, eine Kulissenbahn 3 sowie einen Seilzugantrieb 4.

An einer Vorderseite 5 des Bildschirmträgers 2 ist ein Bildschirm 6 befestigt. Rückseitig ist an dem Bildschirmträger 2 eine (Iaschen- oder hebelartige) Führungskontur 7 angebracht, die mit einem Eingriff 8 in die Kulissenbahn 3 formschlüssig eingreift. Der Bildschirmträger 3 kann dabei einerseits mit diesem Eingriff 8 entlang der Kulissenbahn 3 verschoben werden. Andererseits kann der Bildschirmträger 2 um den Eingriff 8 verschwenkt werden.

Die Kulissenbahn 3 erstreckt sich im Wesentlichen horizontal innerhalb eines (lediglich grob angedeuteten) Armaturenbretts 9 eines Kraftfahrzeugs oberhalb einer darin vorgesehenen Aufnahme 10 für den Bildschirmträger 2 und den daran befestigten Bildschirm 6.

Der Seilzugantrieb 4 umfasst einen Seilzug 11, der über zwei Hauptumlenkpunkte 12,13 auf eine Wickeltrommel 14 geführt ist.

Bei den Hauptumlenkelementen 12,13 handelt es sich um drehfeste Achsen oder rotierbar gelagerte Rollen, über denen der Seilzug 11 abläuft, und die den Seilzug 11 um jeweils etwa 180° umlenken.

Die Wickeltrommel 14 bildet sowohl den Anfang und das Ende des Seilzugs 11, in dem bei Drehung der Wickeltrommel 14 ein Ende des Seilzugs 11 auf der Wickeltrommel 14 aufgewickelt, und das andere Ende des Seilzugs 11 gleichzeitig von der Wickeltrommel 14 abgewickelt wird. Vorzugsweise wird ein offener Seilzug 11 mit zwei tatsächlichen Enden verwendet, die jeweils an der Wickeltrommel 14 befestigt sind. Im Rahmen der Erfindung kann aber auch ein ringförmig geschlossener Seilzug 11 herangezogen werden, der ein- oder mehrfach um die Wickeltrommel 14 gewickelt ist. In diesem Fall bildet die Wickeltrommel 14 lediglich antriebstechnisch Anfang und Ende des Seilzugs 11, indem die Krafteinleitung in den Seilzug 11 stets über die Wickeltrommel 14 erfolgt.

In dem von der Wickeltrommel 14 abgewandten Mittelbereich des Seilzugs 11 ist an diesem zwischen den Hauptumlenkelementen 12 und 13 ein Mitnehmer 15 befestigt, der über einen Mitnehmerarm 16 gelenkig mit einer Unterkante 17 des Bildschirms 6 gekoppelt ist. Ein Bereich zwischen den Hauptumlenkelementen 12 bzw. 13 und der Wickeltrommel 14 ist der Seilzug 11 andererseits jeweils über eine Seilspanneinheit 18 bzw. 19 geführt. Die Wickeltrommel 14 ist mit den Seilspanneinheiten 18,19 in einer - nachfolgend näher beschriebenen - Vormontageeinheit 20 integriert. Der Seilzugantrieb 4 umfasst weiterhin einen (Antriebs-)Motor 21, insbesondere in Form eines Elektromotors, der - gegebenenfalls über ein nicht näher dargestelltes Getriebe - antriebsmäßig mit der Wickeltrommel 14 gekoppelt ist.

In der Darstellung gemäß Fig. 1 bis 5 ist der Mitnehmer 15 beispielhaft entlang einer horizontalen Gerade oberhalb der Aufnahme 10 zwischen den Hauptumlenkelementen 12,13 verschiebbar. Die Hauptumlenkelemente 12,13 bilden hierbei jeweils einen Anschlag für den Mitnehmer 15 und begrenzen somit dessen Verschiebeweg. Abweichend von der geradlinigen Führung des Seilzuges 11 zwischen den Hauptumlenkelementen 12,13 kann der Seilzug 11, und mit ihm der Mitnehmer 15 aber auch innerhalb beliebiger krummliniger Raumkurven geführt sein.

In der Darstellung gemäß Fig. 1 schlägt der Mitnehmer 15 an dem vorderen Hauptumlenkelement 12 an. Diese Stellung des Seilzugs 11 korrespondiert mit einer Öffnungsstellung 22 des Bildschirmträgers 2, in der der Bildschirmträger 2 vor dem Armaturenbrett 9 in einem daran angrenzenden Fahrzeuginnenraum 23 angeordnet ist. Der Bildschirmträger 2 ist hierbei gegenüber der Vertikalen leicht verkippt, so dass seine Vorderseite 5, und mit dieser der daran befestigte Bildschirm 6 schräg nach oben in den Fahrzeuginnenraum 23 ausgerichtet, und somit von den Fahrzeuginsassen gut zugänglich (und damit gut einsehbar) ist. In der Öffnungsstellung 22 des Bildschirmträgers 2 befindet sich der Eingriff der Führungskontur 7 am vorderen Anschlag der Kulissenbahn 3. Als "vorne" wird hierbei die dem Fahrzeuginsassen zugewandte Seite des Armaturenbretts 9 bezeichnet.

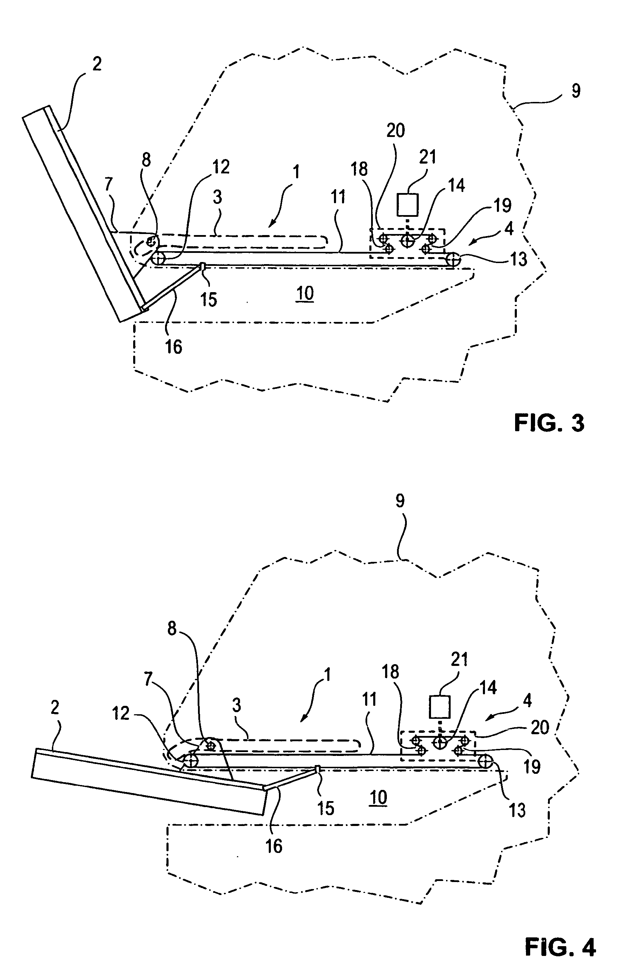

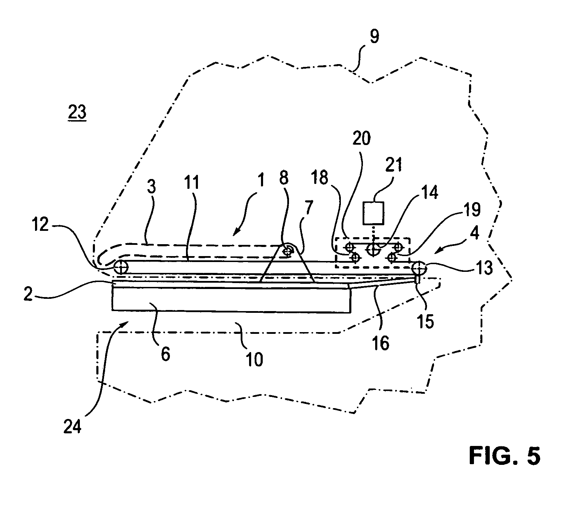

Zum Verfahren des Bildschirmträgers 2 und des daran befestigten Bildschirms 6 aus der Öffnungsstellung 22 in eine in Fig. 5 dargestellte Parkstellung 24 wird die Wickeltrommel 14 durch den Motor 21 (in der Darstellung) im Gegenuhrzeigersinn angetrieben, wodurch der Mitnehmer 15 in Richtung auf das Hauptumlenkelement 13 bewegt wird. Hierdurch wird, wie aus der Abfolge der Fig. 2 bis 5 ersichtlich ist, der Bildschirmträger 2 zunächst über eine vertikale Ausrichtung (Fig. 2) in eine im Wesentlichen horizontale Ausrichtung (Fig. 4) verschwenkt und in dieser etwa horizontalen Ausrichtung anschließend entlang der Führungsbahn 3 in die Aufnahme 10 eingezogen.

Fig. 5 zeigt den Bildschirmträger 2 mit dem daran befestigten Bildschirm 6 in der Parkstellung 24, in der der Bildschirmträger 2 mit dem Bildschirm 6 vollständig in der Aufnahme 10 aufgenommen, und somit gegenüber dem Fahrzeuginnenraum 23 verborgen ist. In der Parkposition 24 ist der Eingriff 8 der Führungskontur 7 etwa am hinteren Anschlag der Kulissenbahn 3 angeordnet, während der Mitnehmer 15 etwa an dem hinteren Hauptumlenkelement 13 anschlägt.

Die Öffnung der Aufnahme 10 zum Fahrzeuginnenraum 23 wird optional durch eine (hier nicht dargestellte) Klappe verschlossen. Alternativ hierzu können der Bildschirm 6 und/oder der Bildschirmträger 2 auch derart ausgebildet sein, dass sie die Öffnung der Aufnahme 10 bündig abschließen.

Bei der öffnenden Stellbewegung des Bildschirmträgers 2 von der Parkstellung 24 in die Öffnungsstellung 22 werden die in Fig. 1 bis Fig. 5 dargestellten Stellungen der Einrichtung 1 in umgekehrter Reihenfolge durchlaufen.

Innerhalb jeder Seilspanneinheit 18 bzw. 19 ist der Seilzug 11 über ein festes Umlenkelement 25 sowie ein auslenkbares Umlenkelement 26 geführt, wobei an jedem dieser Umlenkelemente 25,26 der Seilzug 11 um etwa 180° umgelenkt wird. Die auslenkbaren Umlenkelemente 26 sind in horizontaler Richtung, somit also etwa parallel zur Haupterstreckung des Seilzugs 11 gegen eine elastische Rückstellkraft verschiebbar und bewirken somit einen Ausgleich der effektiven Seilzuglänge. Durch diesen Längenausgleich können insbesondere Kraftspitzen beim Anfahren der öffnenden bzw. schließenden Verstellbewegung des Bildschirmträgers 2 abgefangen werden. Die Seilspanneinheit 18 ist hierbei beim Öffnen des Bildschirmträgers 2 dem Mitnehmer 15 und der Wickeltrommel 14 in Zugrichtung des Seilzugs 11 zwischengeschaltet und trägt daher beim Öffnen des Bildschirmträgers 2 aktiv zur Kompensation von Belastungsspitzen bei. Die Seilspanneinheit 19 ist dagegen beim Schließen des Bildschirmträgers 2 dem Mitnehmer 15 und der Wickeltrommel 14 in Zugrichtung des Seilzugs 11 zwischengeschaltet und kompensiert hierdurch Belastungsspitzen beim Schließen des Bildschirmträgers 2. Durch die Seilspanneinheiten 18 und 19 werden außerdem Unterschiede der Seillänge infolge von Temperaturschwankungen, Alterung des Seilzugs, einer Variation des Wickeltrommeldurchmessers, etc. ausgeglichen. Die Seilspanneinheiten 18 und 19 ermöglichen außerdem allgemein eine präzise Einstellung der Seilspannung, so dass eine Unter- oder Überspannung des Seilzugs 11 und insbesondere ein hieraus resultierender Seilschlupf bzw. ein übermäßiger Seilverschleiß vermieden wird.

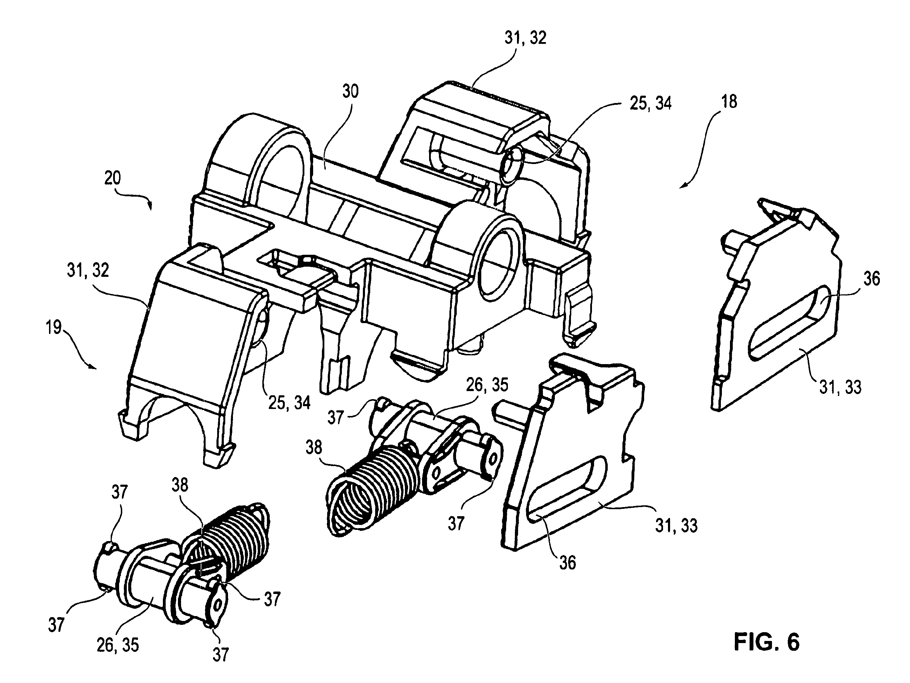

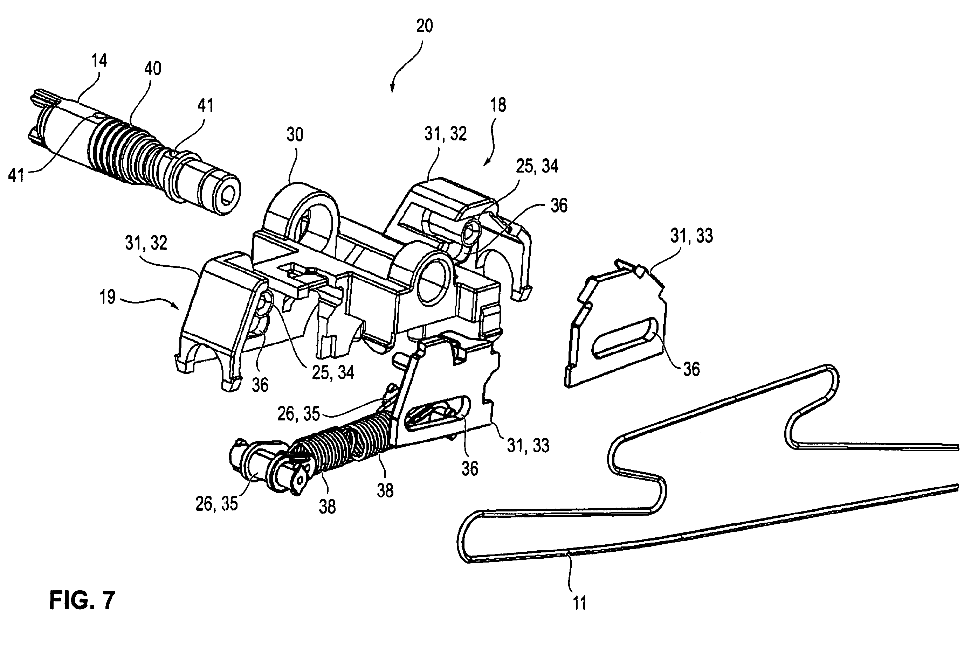

Eine Ausführungsform der Vormontageeinheit 20 ist in den Fig. 6 bis 11 in konkretem Detail dargestellt. Wie insbesondere aus den Fig. 6 und 7 erkennbar ist, umfasst die Vormontageeinheit 20 hier einen Lagerblock 30 zur Lagerung der (in Fig. 7 zusätzlich dargestellten) Wickeltrommel 14. Jede der Seilspanneinheiten 18 und 19 umfasst ein Gehäuse 31, das jeweils aus einer Gehäuseschale 32 und einem auf diese aufsteckbaren Gehäusedeckel 33 gebildet ist. Jeweils die Gehäuseschalen 32 der Seilspanneinheiten 18 und 19 sind hierbei einstückig mit dem Lagerblock 30 verbunden. Insbesondere wird der Lagerblock 30 mit den Gehäuseschalen 32 der Seilspanneinheiten 18,19 als einstückiges Spritzgussbauteil aus Kunststoff gefertigt.

Das feste Umlenkelement 25 jeder Seilspanneinheit 18 und 19 ist durch eine einstückig an die jeweilige Gehäuseschale 32 angespritzte Achse 34 gebildet, die somit sowohl ortsfest als auch drehfest ist. Das auslenkbare Umlenkelement 26 jeder Seilspanneinheit 18,19 ist ebenfalls durch eine im Montagezustand drehfeste Achse 35 gebildet, die aber im Gehäuse 31 der jeweiligen Seilspanneinheit 18 bzw. 19 in einer dort vorgesehenen Langlochführung 36 quer zu ihrer axialen Ausdehnung linear verschiebbar geführt ist.

Die Langlochführung 36 ist bei jeder der beiden Seilspanneinheiten 18 und 19 gebildet durch zwei miteinander fluchtend angeordnete Langlöcher, von denen eines in den jeweiligen Gehäusedeckel 33, und das andere in die diesem gegenüberliegende Seitenwand der Gehäuseschale 32 eingebracht ist.

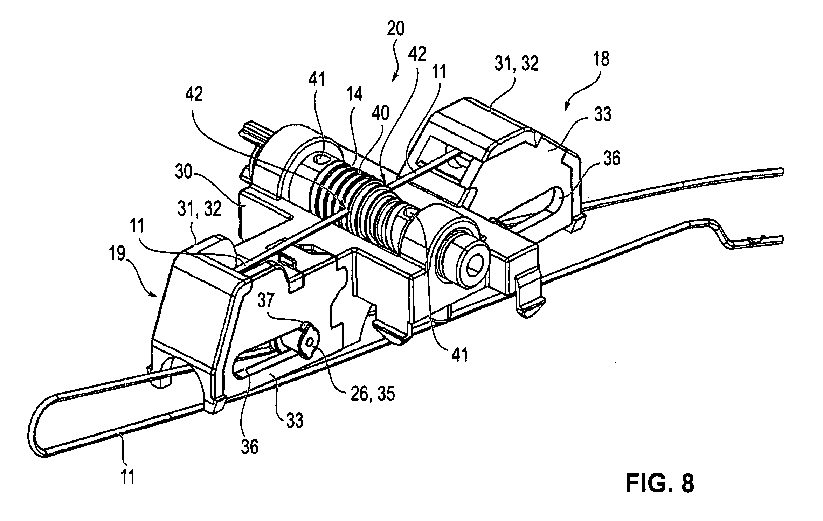

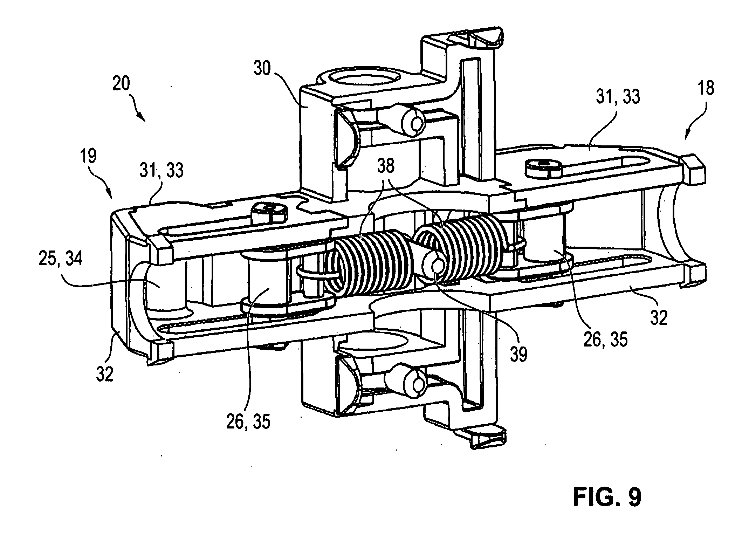

Die Achse 35 der jeweiligen Seilspanneinheit 18,19 ist in der zugehörigen Langlochführung 36 jeweils nach Art eines Bajonettverschlusses gehalten. Die Achse 35 weist hierzu an jedem ihrer Axialenden zwei diametral zueinander vom Achsumfang abstehende Radialvorsprünge 37 auf. Mit diesen Radialvorsprüngen 37 hintergreift die Achse 35 in dem insbesondere in den Fig. 8 und 9 dargestellten Montagezustand die Langlochführung 36. Die Achse 35 ist hierdurch formschlüssig und somit verliersicher in der Langlochführung 36 gehalten. Durch die Radialvorsprünge 37 ist zudem ein Verkanten der Achse 35 durch Schrägstellung in der Langlochführung 36 sicher vermieden. Andererseits kann jede Achse 35 in einer gegenüber der Montagestellung um 90° gedrehten Lage einfach und werkzeugfrei in die Langlochführung 36 eingesetzt oder aus dieser entnommen werden.

Beide Achsen 35 sind jeweils durch eine zugeordnete Wendelzugfeder 38 in Richtung auf den Lagerblock 30 vorgespannt. Die Wendelzugfedern 38 sind hierbei an einem zentralen Vorsprung 39 (Fig. 9) des Lagerblocks 30 widergelagert. Die Achsen 35 der Seilspanneinheiten 18 und 19 sind hierdurch in unbelastetem Zustand am jeweils inneren, d.h. dem Lagerblock 30 zugewandten Anschlag der Langlochführung 36, gehalten. Das Umlenkelement 26 ist hierdurch in seiner Ruhelage auf weitestmöglichem Abstand zu dem festen Umlenkelement 25 gehalten. Anstelle von Wendelzugfedem können auch andersartige Federelemente, insbesondere Wendeldruckfedem, Blattfedern oder angeformte integrale Federelemente vorgesehen sein.

Wie insbesondere aus den Fig. 7 und 8 erkennbar ist, hat die Wickeltrommel 14 ein eingeschnittenes Gewinde 40 (Fig. 7), in das der Seilzug 11 eingelegt wird. Bei Verwendung eines offenen Seilzugs 11 werden die beiden physikalischen Enden dieses Seilzuges 11 bestimmungsgemäß in zwei Bohrungen 41 verankert, die axial beidseitig des Gewindes 40 in die Wickeltrommel 14 eingebracht sind. Zur besseren Verankerung des Seilzugs 11 sind optional an den Enden desselben abgewinkelte Nippel angebracht, die formschlüssig in die Vertiefungen 41 eingreifen, insbesondere einrasten. Bei Verwendung eines Kunststoffseils als Seilzug 11 sind die Nippel insbesondere einstückig angespritzt. Anstelle eines offenen Seilzugs 11 kann aber auch - wie in Fig. 7 dargestellt - ein ringförmig geschlossener Seilzug 11 verwendet werden. Dieser wird dann ein- oder mehrfach um die Wickeltrommel 40 geschlungen.

Wie insbesondere den Fig. 7 und 8 zu entnehmen ist, nimmt der Durchmesser der Wickeltrommel 14 im Bereich des Gewindes 40 zu dessen (darstellungstechnisch) vorderem Ende hin ab. In diesem Bereich mit reduziertem Wickeltrommeldurchmesser befindet sich die Seilablösung 42 (Fig. 8) des Seilzugs 11 bestimmungsgemäß dann, wenn sich der Bildschirmträger 2 in oder nahe der Öffnungsstellung 22 befindet. Durch den verringerten Wickeltrommeldurchmesser wird in diesem Bereich eine höhere Übersetzung des Seilzugantriebs 4, d.h. eine verringerte Seilzuggeschwindigkeit bei konstanter Drehzahl der Wickeltrommel 14 erreicht.

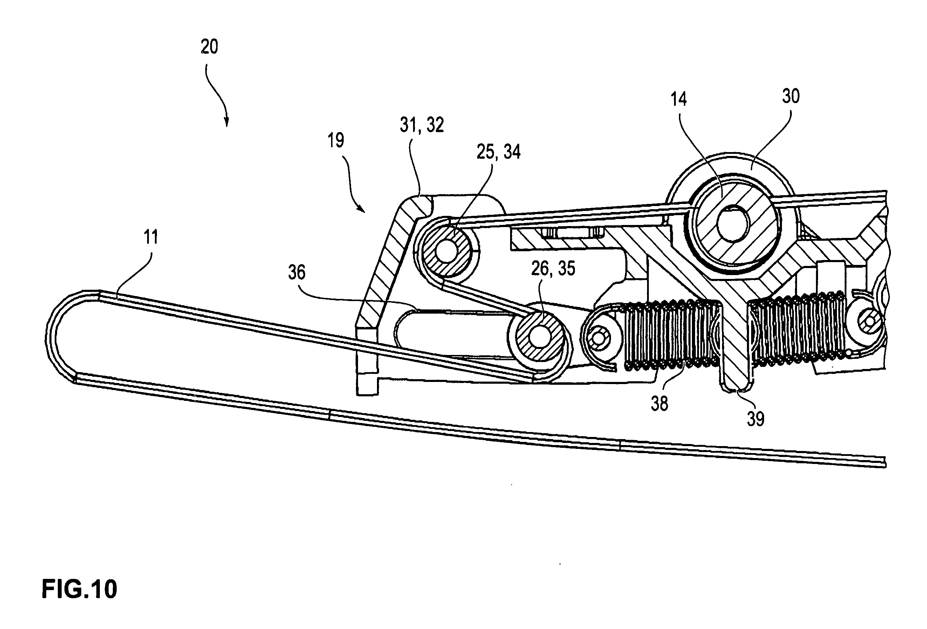

Ausgehend von der Wickeltrommel 14 wird der Seilzug 11 in der in Fig. 10 dargestellten Weise über die Umlenkelemente 25 und 26 der Seilspanneinheiten 18,19 geführt.

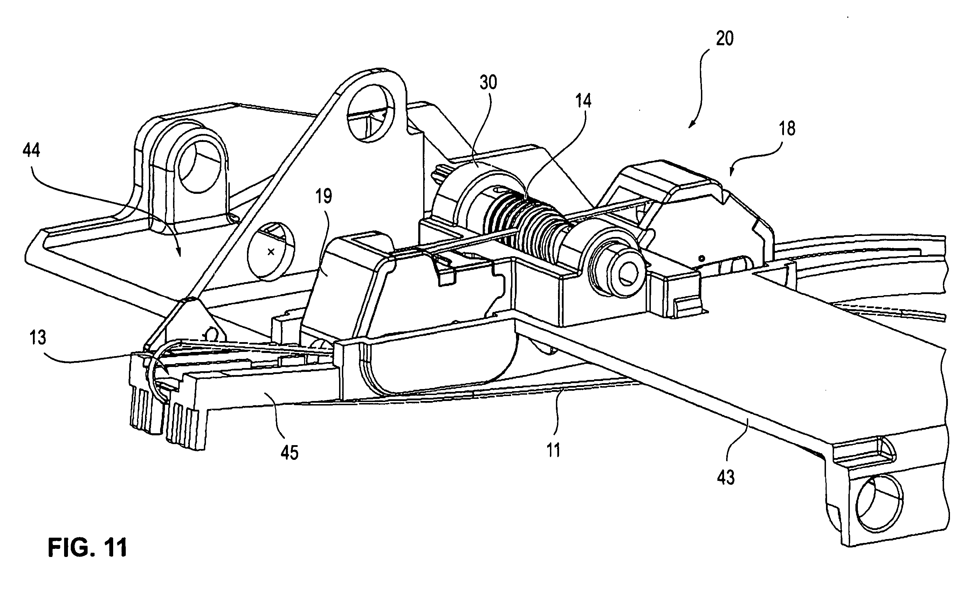

Die Vormontageeinheit 20 kann unabhängig von weiteren Komponenten der Bildschirmverstelleinrichtung 1 oder des Kraftfahrzeugs, in das diese Einrichtung 1 eingebaut werden soll, in der Fig. 8 dargestellten Weise vormontiert werden. Insbesondere kann auch bereits der Seilzug 11 außerhalb des Fahrzeugs in die Vormontageeinheit 20 eingelegt werden. Die Vormontageeinheit 20 wird bestimmungsgemäß in diesem Zustand anschließend auf eine in Fig. 11 dargestellte Motortraverse 43 aufgerastet, die in ihrem (darstellungstechnisch) hinteren Bereich eine Aufnahme 44 zur Halterung des (hier nicht dargestellten) Antriebsmotors 21 aufweist. Einstückig mit der Motortraverse 43 ist hierbei eine Laufbahn 45 ausgebildet, entlang der der Seilzug 11 mit dem (hier nicht sichtbaren) Mitnehmer 15 geführt ist. Angedeutet in Fig. 11 ist insbesondere der Ort des (selbst aber nicht dargestellten) weiteren Hauptumlenkelements 13. Vormontiert in der in Fig. 11 dargestellten Weise kann die aus der Vormontageinheit 20, der Motortraverse 43 mit der Laufbahn 45 sowie zusätzlich dem Antriebsmotor 21 und den Umlenkelementen 12,13 sowie dem Mitnehmer 15 gebildete Baugruppe im Ganzen in einem Kraftfahrzeug montiert werden.

### Bezugszeichenliste

- 1: (Bildschirmverstell-)Einrichtung
- 2: Bildschirmträger
- 3: Kulissenbahn
- 4: Seilzugantrieb
- 5: Vorderseite
- 6: Bildschirm
- 7: Führungskontur
- 8: Eingriff
- 9: Armaturenbrett
- 10: Aufnahme
- 11: Seilzug
- 12: Hauptumlenkelement
- 13: Hauptumlenkelement
- 14: Wickeltrommel
- 15: Mitnehmer
- 16: Mitnehmerarm
- 17: Unterkante
- 18: Seilspanneinheit
- 19: Seilspanneinheit
- 20: Vormontageeinheit
- 21: (Antriebs-)Motor
- 22: Öffnungsstellung
- 23: Fahrzeuginnenraum
- 24: Parkstellung
- 25: (festes) Umlenkelement
- 26: (auslenkbares) Umlenkelement
- 30: Lagerblock
- 31: Gehäuse
- 32: Gehäuseschale
- 33: Gehäusedeckel
- 34: Achse
- 35: Achse
- 36: Langlochführung
- 37: Radialvorsprung
- 38: Wendelzugfeder
- 39: Vorsprung
- 40: Gewinde
- 41: Bohrung
- 42: Seilablösung
- 43: Motortraverse
- 44: Aufnahme
- 45: Laufbahn

## Patentansprüche

1. Bildschirmverstelleinrichtung (1) für ein Kraftfahrzeug, mit einem Bildschirm (6) oder Bildschirmträger (2) zur Halterung eines solchen und einem Seilzugantrieb (4) zur Verstellung des Bildschirms (6) bzw. Bildschirmträgers (2) zwischen einer Öffnungsstellung (22), in der der Bildschirm (6) von einem Fahrzeuginnenraum (23) aus zugänglich ist, und einer Parkstellung (24), in der der Bildschirm (6) gegenüber dem Fahrzeuginnenraum (23) verborgen ist, wobei der Seilzugantrieb (4) einen über einen Mitnehmer (15) mit dem Bildschirm (6) bzw. Bildschirmträger (2) gekoppelten Seilzug (11) umfasst,
**dadurch gekennzeichnet,**
**dass** der Seilzug (11) beidendseitig über zwei Umlenkelemente (12,13) und mindestens eine Seilspanneinheit (18,19) auf eine mit einem Antriebsmotor (21) gekoppelte Wickeltrommel (14) geführt ist, und dass der Seilzugantrieb (4) einen Lagerblock (30) zur Lagerung der Wickeltrommel (14) umfasst, der mit der Seilspanneinheit (18,19) eine selbststabile Vormontageeinheit (20) bildet oder zu einer solchen vormontierbar ist, wobei ein Gehäuse (31) der Seilspanneinheit (18,19) zumindest teilweise einstückig mit dem Lagerblock (30) gefertigt ist.

2. Bildschirmverstelleinrichtung (1) nach Anspruch 1,
wobei die Seilspanneinheit (18,19) ein ortsfestes Umlenkelement (25) und ein gegenüber diesem vorgespanntes und elastisch auslenkbares Umlenkelement (26) für den Seilzug (11) aufweist.

3. Bildschirmverstelleinrichtung (1) nach Anspruch 2,
wobei das ortsfeste Umlenkelement (25) einstückig mit dem Lagerblock (30) ausgebildet ist.

4. Bildschirmverstelleinrichtung (1) nach Anspruch 2 oder 3,
wobei das auslenkbare Umlenkelement (26) bezüglich eines Gehäuses (31) der Seilspanneinheit (18,19) linear oder krummlinig geführt ist.

5. Bildschirmverstelleinrichtung (1) nach Anspruch 4,
wobei das auslenkbare Umlenkelement (26) eine Achse (35) umfasst, die in einer Langlochführung (36) des Gehäuses (31) verschiebbar geführt ist, wobei die Achse (35) im Montagezustand die Langlochführung (36) mit mindestens einem Radialvorsprung (37) formschlüssig hintergreift, der derart angebracht ist, dass die Achse (35) in gegenüber dem Montagezustand gedrehtem Zustand durch die Langlochführung (36) hindurchführbar ist.

6. Bildschirmverstelleinrichtung (1) nach Anspruch 4,
wobei das auslenkbare Umlenkelement (26) mittels einer Schienenführung oder an einem Hebelarm gegenüber dem festen Umlenkelement (25) geführt ist.

7. Bildschirmverstelleinrichtung (1) nach einem der Ansprüche 1 bis 6,
wobei die Seilspanneinheit (18,19) eine an dem Lagerblock (30) einstückig angeformte Gehäuseschale (32) und einen darauf aufsteckbaren oder aufrastbaren Gehäusedeckel (33) aufweist, der etwa senkrecht zur Achse (34,35) der Umlenkelemente (25,26) der Seilspanneinheit (18,19) angeordnet ist.

8. Bildschirmverstelleinrichtung (1) nach einem der Ansprüche 1 bis 7,
wobei der Seilzug (11) beidendseitig über je eine Seilspanneinheit (18,19) auf die Wickeltrommel (14) geführt ist, und beide Seilspanneinheiten (18,19) mit dem Lagerblock (30) vormontiert bzw. vormontierbar sind.

9. Bildschirmverstelleinrichtung (1) nach einem der Ansprüche 1 bis 8,
wobei der Lagerblock (30) mit der oder jeder daran vormontierten Seilspanneinheit (18,19) auf einen Motorträger (43) zur Halterung des Motors (21) aufrastbar ist.

10. Bildschirmverstelleinrichtung (1) nach einem der Ansprüche 1 bis 9,
wobei die Wickeltrommel (14) einen entlang ihrer axialen Ausdehnung variierenden Durchmesser zur Realisierung einer variablen Seilzuggeschwindigkeit bei konstanter Motordrehzahl aufweist.

11. Bildschirmverstelleinrichtung (1) nach Anspruch 10,
wobei die Wickeltrommel (14) in einem axialen Bereich, der nach Maßgabe der jeweiligen Seilablösung (42) des Seilzugs (11) vom Umfang der Wickeltrommel (14) einem an die Öffnungsstellung (22) angrenzenden Bereich des Bildschirmverstellwegs entspricht, einen kleineren Durchmesser aufweist als in einem axialen Bereich, der nach Maßgabe der Seilablösung (42) einer Mittelstellung des Bildschirms (6) entlang seines Verschiebeweges zwischen der Öffnungsstellung (22) und der Parkstellung (24) entspricht.

## Claims

1. Screen adjustment device (1) for a motor vehicle, with a screen (6) or screen mounting (2) for mounting one of them, and a control cable drive (4) for setting the screen (6) or screen mounting (2) between an open position (22), in which the screen (6) is accessible from a vehicle interior (23), and a parked position (24), in which the screen (6) is hidden with respect to the vehicle interior (23), wherein the control cable drive (4) comprises a control cable (11) that is coupled via a driver (15) to the screen (6) or screen mounting (2),
**characterised in that**,
the control cable (11) is guided on both sides via two deflection elements (12, 13) and at least one cable tensioning unit (18,19) onto a winding reel (14) that is coupled to a drive motor (21), and that the control cable drive (4) comprises a bearing block (30) - for carrying the winding reel (14) - that forms a self-contained, pre-assembled unit (20) with the cable tensioning unit (18,19) or can be pre-assembled into one, wherein a housing (31) of the cable tensioning unit (18,19) is manufactured at least partially in one piece with the bearing block (30).

2. Screen adjustment device (1) according to claim 1,
wherein the cable tensioning unit (18,19) has a fixed deflection element (25) and another deflection element (26) for the control cable (11) that is pre-stressed in relation to it and can be moved elastically.

3. Screen adjustment device (1) according to claim 2, wherein the fixed deflector (25) is constructed in one piece with the bearing block (30).

4. Screen adjustment device (1) according to claim 2 or 3, wherein the moveable deflection element (26) is guided linearly or curvilinearly relative to a housing (31) of the cable tensioning unit (18,19).

5. Screen adjustment device (1) according to claim 4,
wherein the moveable deflection element (26) comprises an axle (35) that is displaceably guided in a slotted hole guide (36) of the housing (31), wherein the axle (35), when assembled, grips positively behind the slotted hold guide (36) with at least one radial projection (37) that is attached in such a way that the axle (35) can be conducted through the slotted hole guide (36) when rotated relative to the assembled state.

6. Screen adjustment device (1) according to claim 4,
wherein the moveable deflection element (26) is guided relative to the fixed deflection element (25) by means of a rail guide or on a lever arm.

7. Screen adjustment device (1) according to one of the claims 1 to 6, wherein the cable tensioning unit (18,19) has a housing shell (32) formed in one piece on the bearing block (30) and a housing lid (33) that can be fitted or latched on it and that is arranged roughly perpendicular to the axle (34,35) of the deflection elements (25,26) of the cable tensioning unit (18,19).

8. Screen adjustment device (1) according to one of the claims 1 to 7, wherein both sides of the control cable (11) are guided over a cable tensioning unit (18,19) on the winding reel (14), and both cable tensioning units (18,19) are pre-assembled with the bearing block (30) or can be pre-assembled with it.

9. Screen adjustment device (1) according to one of the claims 1 to 8, wherein the bearing block (30), along with the or every cable tensioning unit (18,19) pre-assembled with it, can be latched on a motor carrier (43) in order to stop the motor (21).

10. Screen adjustment device (1) according to one of the claims 1 to 9, wherein the winding reel (14) has a diameter that varies along its axial extension in order to achieve a variable control cable speed at constant rate of motor revolution.

11. Screen adjustment device (1) according to claim 10, wherein the winding reel (14) has a smaller diameter within an axial area that corresponds to an area bordering the open position (22) of the screen adjusting range according to the measure of the particular cable displacement (42) of the control cable (11) from the circumference of the winding reel (14) than it does within an axial area that corresponds to a middle position of the screen (6) along its displacement path between the open position (22) and the parked position (24) according to the measure of the cable displacement (42).

## Revendications

1. Dispositif de réglage d'écran (1) pour un véhicule automobile, avec un écran (6) ou un support d'écran (2) pour le maintien d'un écran et un entraînement à câble de traction (4) pour le déplacement de l'écran (6) ou du support d'écran (2) entre une position d'ouverture (22) où l'écran (6) est accessible dans un habitacle de véhicule (23), et une position rabattue (24) où l'écran (6) est rabattu dans l'habitacle du véhicule (23), l'entraînement à câble de traction (4) comprenant un câble de traction (11) accouplé à l'écran (6) ou au support d'écran (2) par un entraîneur (15),
**caractérisé**
**en ce que** le câble de traction (11) est guidé de part et d'autre par deux éléments de renvoi (12, 13) et par au moins une unité de tension de câble (18, 19) sur un tambour d'enroulement (14) accouplé à un moteur d'entraînement (21), et en ce que l'entraînement à câble de traction (4) comprend un bloc de palier (30) pour le montage du tambour d'enroulement (14), lequel forme une unité de pré-montage (20) autoportante avec l'unité de tension de câble (18, 19) ou peut être pré-monté pour former une telle unité, un boîtier (31) de l'unité de tension de câble (18, 19) étant fabriqué au moins en partie d'un seul tenant avec le bloc de palier (30).

2. Dispositif de réglage d'écran (1) selon la revendication 1,
où l'unité de tension de câble (18, 19) comporte un élément de renvoi fixe (25) et un élément de renvoi (26) précontraint par rapport à celui-ci et élastiquement déviable pour le câble de traction (11).

3. Dispositif de réglage d'écran (1) selon la revendication 2,
où l'élément de renvoi fixe (25) est réalisé d'un seul tenant avec le bloc de palier (30).

4. Dispositif de réglage d'écran (1) selon la revendication 2 ou la revendication 3,
où l'élément de renvoi déviable (26) est guidé de manière linéaire ou incurvée par rapport à un boîtier (31) de l'unité de tension de câble (18, 19).

5. Dispositif de réglage d'écran (1) selon la revendication 4,
où l'élément de renvoi déviable (26) comprend un axe (35) guidé de manière coulissante dans un guidage à trou oblong (36) du boîtier (31), l'axe (35) étant en état de montage mécaniquement bloqué dans le guidage à trou oblong (36) par au moins une saillie radiale (37) disposée de telle manière que l'axe (35) peut être inséré dans le guidage à trou oblong (36) dans un état de rotation par rapport à l'état de montage.

6. Dispositif de réglage d'écran (1) selon la revendication 4,
où l'élément de renvoi déviable (26) est guidé au moyen d'une glissière ou sur un bras de levier par rapport à l'élément de renvoi fixe (25).

7. Dispositif de réglage d'écran (1) selon l'une des revendications 1 à 6,
où l'unité de tension de câble (18, 19) comporte une coque de boîtier (32) formée d'un seul tenant sur le bloc de palier (30) et un couvercle de boîtier (33) enfichable ou enclenchable sur celle-ci, lequel est disposé sensiblement perpendiculairement à l'axe (34, 35) des éléments de renvoi (25, 26) de l'unité de tension de câble (18, 19).

8. Dispositif de réglage d'écran (1) selon l'une des revendications 1 à 7,
où le câble de traction (11) est guidé de part et d'autre sur le tambour d'enroulement (14) par une unité de tension de câble (18, 19) respective, et où les deux unités de tension de câble (18, 19) sont pré-montées ou pré-montables avec le bloc de palier (30).

9. Dispositif de réglage d'écran (1) selon l'une des revendications 1 à 8,
où le bloc de palier (30) est enclenchable avec l'unité de tension de câble, ou avec chaque unité de tension de câble (18, 19) pré-montée sur celui-ci, sur un support de moteur (43) pour le maintien du moteur (21).

10. Dispositif de réglage d'écran (1) selon l'une des revendications 1 à 9,
où le tambour d'enroulement (14) présente un diamètre variable sur son extension axiale, pour obtenir une vitesse de câble de traction variable pour une vitesse de rotation constante du moteur.

11. Dispositif de réglage d'écran (1) selon la revendication 10,
où, dans une zone axiale, laquelle, en fonction du décollement (42) respectif du câble de traction (11) de la périphérie du tambour d'enroulement (14), correspond à une zone de la course de réglage d'écran adjacente à la position d'ouverture (22), le tambour d'enroulement (14) présente un diamètre inférieur à celui dans une zone axiale, laquelle, en fonction du décollement (42) respectif du câble de traction de la périphérie du tambour d'enroulement, correspond à une position centrale de l'écran (6) le long de sa course de déplacement entre la position d'ouverture (22) et la position rabattue (24).
